# EUROPÄISCHE PATENTANMELDUNG

(11) **EP 0 900 813 A1**
(43) Veröffentlichungstag der Anmeldung: **10.03.1999**
(21) Anmeldenummer: 98116407.2
(22) Anmeldetag: 29.08.1998
(51) Int. Cl.: C08G 18/76, C09D 175/04

(54) **Verwendung Schaum-freier Zusammensetzungen mit einem Gehalt an Polyurethanen zur Herstellung von Giessharzen und Beschichtungsmassen**

(30) Priorität: 08.09.1997 DE 19739191
(71) Anmelder: Henkel Kommanditgesellschaft auf Aktien, 40589 Düsseldorf-Holthausen (DE)
(72) Erfinder: Grützmacher, Roland, 42489 Wülfrath (DE); Höfer, Rainer Dr., 40477 Düsseldorf (DE)

(57) **Zusammenfassung**

Schaum-freier Zusammensetzungen mit einem Gehalt an Polyurethanen, die Polyurethane auf Basis von Diphenylmethandiisocyanat enthalten, wobei diese Polyurethane als Bausteine enthalten
A) Polymer-MDI mit einem Gehalt an Diisocyanat-Monomeren von weniger als 30 Gew.-% - bezogen auf das Polymer-MDI - und mit einer durchschnittlichen NCO-Funktionalität von mehr als 2,7 und
B) mindestens ein Diol und/oder Polyol,
wobei das Polymer-MDI aus MDI technischer Qualität mit einer durchschnittlichen Funktionalität von wenigstens 2,3 durch Abtrennung von Diisocyanat-Monomeren herstellbar ist,
eignen sich in hervorragender Weise zur Herstellung von Gießharzen und Beschichtungsmassen.

## Beschreibung

### Gebiet der Erfindung

Die Erfindung betrifft die Verwendung Schaum-freier Zusammensetzungen zur Herstellung von Gießharzen und Beschichtungsmassen. Diese Zusammensetzungen enthalten spezielle Polyurethane auf Basis von polymerem Diphenylmethandiisocyanat mit einer NCO-Funktionalität von mehr als 2,7 und einem Monomer-MDI-Gehalt von weniger als 25 Gew.-% - bezogen auf das Polymer-MDI.

### Stand der Technik

Aus **DE-A-44 41 696** sind Zusammensetzungen zur Herstellung von Schaumkunststoffen, die aus Einweg-Druckbehältern appliziert werden, bekannt. Diese Zusammensetzungen enthalten als reaktive Komponente mindestens ein Polymer-MDI bzw. Polymer-MDI-Prepolymer mit einem Gehalt an Diisocyanat-Monomeren von weniger als 20 Gew.-% - bezogen auf das Polymer-MDI - mit einer durchschnittlichen NCO-Funktionalität von mehr als 2,7, mit einem NCO-Gehalt von 26 bis 30 Gew.-% - bezogen auf das Polymer-MDI ― und mit einer Viskosität von 5 bis 2000 Pas bei 25 °C nach DIN 53015, wobei das Polymer-MDI herstellbar ist aus technischem MDI (Roh-MDI) mit einer durchschnittlichen Funktionalität von wenigstens 2,3 durch Abtrennung des Monomer-MDI.

Gemäß Seite 2, Zeilen 5ff der genannten DE-A-44 41 696 sind Schaumkunststoffe Werkstoffe zelliger Struktur. Die Offenbarung der DE-A-44 41 696 bezieht sich denn auch auf die Verwendung spezieller Polyurethan-haltiger Zusammensetzungen auf technischen Gebieten, bei denen die Applikation in Form eines Schaumes erfolgt. Über spezielle Polyurethan-haltige Gießharze und Beschichtungsmassen, also nichtzellige (schaumfreie) Anwendungsformen von Polyurethanen wird in der DE-A-44 41 696 nichts ausgesagt oder nahegelegt.

### Beschreibung der Erfindung

Es besteht ein ständiger Bedarf nach Gießharzen und Beschichtungsmassen auf Basis von Polyurethanen, mit verbesserten Eigenschaften. Da Gießharze und Beschichtungsmassen im Gegensatz zu Schäumen (= zelligen Strukturen) strukturell den nichtzelligen Strukturen zuzuordnen sind, handelt es sich bei den erfindungsgemäßen Zusammensetzungen um Schaum-freie Systeme.

Gegenstand der Erfindung ist die Verwendung Schaum-freier Zusammensetzungen mit einem Gehalt an Polyurethanen zur Herstellung von Gießharzen und Beschichtungsmassen, dadurch gekennzeichnet, daß die Zusammensetzungen Polyurethane auf Basis von Diphenylmethandiisocyanat enthalten und daß diese Polyurethane als Bausteine enthalten
A) Polymer-MDI mit einem Gehalt an Diisocyanat-Monomeren von weniger als 30 Gew.-% - bezogen auf das Polymer-MDI - und mit einer durchschnittlichen NCO-Funktionalität von mehr als 2,7 und
B) mindestens ein Diol und/oder Polyol,
wobei das Polymer-MDI aus MDI technischer Qualität mit einer durchschnittlichen Funktionalität von wenigstens 2,3 durch Abtrennung von Diisocyanat-Monomeren herstellbar ist.

Bei der erfindungsgemäßen Verwendung ist von besonderem Vorteil, daß die Geschwindigkeit der **Durchhärtung** der die Komponenten A) und B) enthaltenden Gießharze und Beschichtungsmassen deutlich schneller erfolgt, als die Durchhärtung nicht-erfindungsgemäßer Systeme. Darüber hinaus zeichnen sich die die Komponenten A) und B) enthaltenden Gießharze und Beschichtungsmassen durch eine überraschend gute **Wärmebeständigkeit** aus.

Der Eindeutigkeit halber sei an dieser Stelle klargestellt, daß es sich ― wie dem Fachmann hinlänglich bekannt ― bei 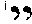 technischem MDI" ( 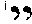 Roh-MDI") um Mischungen unterschiedlicher Species handelt, die verschiedene isomere Diphenylmethandiisocyanate enthalten, ferner verschiedene isomere trifunktionelle Homologe des Diphenylmethandiisocyanats, darüber hinaus jedoch auch entsprechende höherfunktionelle Homologe des MDI.

Im Rahmen der vorliegenden Erfindung wird die Abkürzung MDI zur Kennzeichnung der verschiedenen isomeren Diphenylmethandiisocyanat-Species verwendet (NCO-Funktionalität = 2,0); es handelt sich demnach sowohl bei einzelnen dieser Diphenylmethandiisocyanat-Species, z.B. bei Diphenylmethan-4,4'-diisocyanat, als auch bei Mischungen dieser Diphenylmethandiisocyanat-Species um **Monomer-MDI.**

Von **Polymer-MDI** wird gesprochen, wenn die NCO-Funktionalität höher als 2,0 ist. Dies ist insbesondere bei 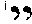 technischem MDI" (Synonym = 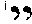 Roh-MDI") der Fall.

Im Rahmen der vorliegenden Erfindung wird als **Komponente A)** ein Polymer-MDI eingesetzt, das eine durchschnittliche NCO-Funktionalität oberhalb von 2,7 und einen Gehalt an Diisocyanat-Monomeren (Monomer-MDI) von weniger als 30 Gew.-% - bezogen auf das Polymer-MDI ― hat. Ein solches Polymer-MDI ist beispielsweise durch Abtrennung von Monomer-MDI aus technischem MDI herstellbar. Zur Abtrennung eignen sich insbesondere die Dünnschicht- oder Kurzweg-Destillation im Vakuum oder die Extraktion sowie die fraktionierte Kristallisation. Der Gehalt an Diisocyanaten soll dabei auf weniger als 30 Gew.-% und vorzugsweise auf weniger als 15 Gew.-% und insbesondere weniger als 5 Gew.-% - bezogen auf Polymer-MDI verringert werden (analytische Bestimmung etwa durch HPLC).

Die Viskosität des Polymer-MDIs ist an sich nicht kritisch, soll jedoch vorzugsweise im Bereich von 5 bis 5000 Pas bei 25 C und insbesondere im Bereich von 20 bis 500 Pas bei 25 C - gemessen in Substanz nach DIN 53015 - liegen.

Als **Komponente B)** wird mindestens ein Diol und/oder Polyol eingesetzt. Die Art des Diols und/oder Polyols ist dabei an sich nicht kritisch und es können alle dem Fachmann einschlägig bekannten und insbesondere marktüblichen Verbindungen eingesetzt werden. Unter Diolen und Polyolen sind dabei ganz allgemein Verbindungen zu verstehen, die 2 bzw. mehrere OH-Gruppen pro Molekül enthalten. Ganz besonders bevorzugt sind dabei Polyester-Diole und/oder Polyether-Diole bzw. Polyester-Polyole und/oder Polyether-Polyole sowie Polyester/ether-Polyole (handelsübliche Produkte der Anmelderin).

Als **Polyester-Diole** können Ester von Dicarbonsäuren, bevorzugt aliphatische Dicarbonsäuren mit 4 bis 8 Kohlenstoffatomen im Alkylenrest, die mit Diolen umgesetzt werden, Anwendung finden, wobei diese ebenfalls freie OH-Gruppen zur Reaktion aufweisen müssen. Beispiele für aliphatische Dicarbonsäuren sind Pimelinsäure, Glutarsäure, Azelainsäure, Sebacinsäure sowie vorzugsweise Bernstein- und Adipinsäure und aromatisceh Dicarbonsäuren wie Phthalsäure und Terephthalsäure. Als zweiwertige Alkohole können Ethylenglykol, Diethylenglykol, 1,2- bzw. 1,3 Propylenglykol, Dipropylenglykol, 1,4-Butandiol und 1,6 Hexandiol zur Anwendung kommen.

Es können aber auch Polyesterpolyole oleochemischer Herkunft verwendet werden, die keine freien Epoxidgruppen aufweisen und durch vollständige Ringöffnung von epoxidierten Triglyceriden eines wenigstens teilweise olefinisch ungesättigten Fettsäure enthaltenden Fettsäuregemisches mit einem oder mehreren Alkoholen mit 1 bis 12 C-Atomen und anschließender partieller Umesterung der Triglyceridderivate zu Alkylesterpolyolen mit 1 bis 12 C-Atomen im Alkylrest hergestellt worden sind (siehe DE 36 26 223).

Als **Polyether-Diole** können die nach dem bekannten Verfahren aus einem oder mehreren Alkylenoxiden mit 2 bis 4 Kohlenstoffatomen im Alkylenrest und einem Startermolekül, das 2 aktive Wasserstoffatome enthält, hergestellten Produkte Verwendung finden. Geeignete Alkylenoxide sind beispielsweise Tetrahydrofuran, 1,3, Propylenoxid, 1,2- bis 2,3-Butylenoxid und Ethylenoxid. Als Startermoleküle kommen in Betracht: Wasser, Dicarbonsäuren, mehrwertige Alkohole wie Ethylenglykol, Propylenglykol-1,2, Diethylenglykol, Dipropylenglykol und Dimerdiole (Handelsprodukt der Anmelderin).

Die langkettigen Diole aus den oben genannten Bausteinen haben ein Molekulargewicht von mehr als 1 000, insbesondere 2 000 bis 6 000 (Gelchromatographie). Sie werden in einer Menge von 0 bis 20, vorzugsweise 0.2 bis 5 OH-Äquivalenten pro NCO-Gruppe hinzugegeben.

Die kurzkettigen Diole werden in einer Menge von 0 bis 10, insbesondere 1 bis 3 OH-Äquivalenten pro NCO-Gruppe eingesetzt. Sie haben ein Molekulargewicht von weniger als 1 000, insbesondere weniger als 100. Konkrete Beispiele sind die Diole, die zur Herstellung der langkettigen Diole verwendet wurden.

Die Herstellung der die Komponenten A) und B) enthaltenden **Polyurethane** kann nach allen dem Fachmann bekannten Methoden geschehen. Hierzu kann es gewünscht sein, die Komponente A) vor der Zugabe der Komponente B) vorzulegen und mit einem nichtreaktiven Verdünner (= einem inerten Lösungsmittel) auf eine gewünschte Viskosität und/oder einen gewünschten NCO-Gehalt einzustellen. Als solche nicht-reaktiven Verdünner kommen im Prinzip alle dem Fachmann bekannten inerten Lösungsmittel in Betracht. Beispiele hierfür sind paraffinische, naphthenische und aromatische Mineralöle, Prozeßöle und Fabrikationsöle, ferner nieder- bis mittelhoch polymerisierte Kohlenwasserstoffe und Kautschuke wie Polyisobutylen, Butylkautschuke, Polycyclopentadien, ferner substituierte Aromaten, ferner modifizierte und unmodifizierte natürliche Öle, ferner Ester und Dialkylamide von Fettsäuren, beispielsweise Methylester natürlicher Fettsäuren, ferner Dicarbonsäureester aliphatischer oder aromatischer Dicarbonsäuren mit C₁₋₈-Alkoholen, ferner Phosphorsäureester wie Tributylphosphat, ferner Dialkylether wie Dioctylether.

Die Herstellung der Polyurethan-haltigen Gießharze und Beschichtungsmassen kann ansonsten nach allen dem Fachmann bekannten Methoden geschehen.

Ein weiterer Gegenstand der Erfindung sind Gießharze und Beschichtungsmassen auf Basis Schaum-freier Zusammensetzungen mit einem Gehalt an Polyurethanen zur Herstellung von Gießharzen und Beschichtungsmassen, wobei diese Zusammensetzungen Polyurethane auf Basis von Diphenylmethandiisocyanat enthalten und wobei diese Polyurethane als Bausteine enthalten
A) Polymer-MDI mit einem Gehalt an Diisocyanat-Monomeren von weniger als 25 Gew.-% - bezogen auf das Polymer-MDI - und mit einer durchschnittlichen NCO-Funktionalität von mehr als 2,7 und
B) mindestens ein Diol und/oder Polyol,
wobei das Polymer-MDI aus MDI technischer Qualität mit einer durchschnittlichen Funktionalität von wenigstens 2,3 durch Abtrennung von Diisocyanat-Monomeren herstellbar ist.

Die folgenden Beispiele dienen der Erläuterung der Erfindung und sind nicht einschränkend zu verstehen.

### Beispiele

### 1. Herstellung von monomerarmem Polymer-MDI

800 g eines handelsüblichen Diphenylmethandiisocyanates technischer Qualität mit einem Gehalt von ca. 53 Gew.-% an Monomer-MDI, einer Viskosität von ca. 200 mPas bei 25 °C, einem NCO-Gehalt von 31,0 Gew.-% und einer mittleren Funktionalität von etwa 2,7 wurden im Hochvakuum (ca. 0,05 mbar) durch Destillation in zwei Fraktionen von je circa 400 g zerlegt. Die Sumpftemperatur betrug 160 bis 210 °C, die Brüdentemperatur ca. 170 °C.

Der Destillationsrückstand stellt ein Polymer-MDI dar, das einen nur geringen Anteil an Monomer-MDI aufweist. Dies wird durch die folgenden technischen Daten belegt:
- Aggregatzustand bei 20 °C:: hochviskos
- Viskosität bei 50 °C (Pas):: 102 (in Substanz, gemäß DIN 53015)
- NCO-Gehalt (Gew.-%):: 28,0
- Gehalt an Monomer-MDI (Gew.-%):: 2,5

### 2. Eingesetzte Rohstoffe

**Komponente A1**): Das gemäß Nr. 1) hergestellte (erfindungsgemäße) monomerarme Polymer-MDI.
**Komponente A2)**: handelsüblichens Diphenylmethandiisocyanat technischer Qualität mit einem Gehalt von ca. 53 Gew.-% an Monomer-MDI, einer Viskosität von ca. 200 mPas bei 25 °C, einem NCO-Gehalt von 31,0 Gew.-% und einer mittleren Funktionalität von etwa 2,7
**Komponente B)**: Polyester/ether-Polyol einer OH-Zahl von 230 (handelsübliches technisches Produkt der Anmelderin)

### Beispiel 1

Komponente A1) wurde mit einem nicht-reaktiven Verdünner auf einen NCO-Gehalt von 18% eingestellt und anschließend mit Komponente B) umgesetzt. Die Einzelheiten waren wie folgt:

500 g der Komponente A1) wurden in einem Dreihalsrührkolben eingewogen und unter Stickstoff auf 80 °C aufgeheizt. 280 g eines nicht-reaktiven Verdünners wurden anschließend langsam zudosiert. Nach vollständiger Dosierung wurde noch eine Stunde homogenisiert und danach auf 20 °C abgekühlt. 50 g der auf diese Weise verdünnten Komponente A1) wurden mit 50 g der Komponente B), die 5 % Zeolith-Pulver als Wasserfänger sowie 0,25 % eines Zinn-Katalysators enthielt, innig durch Rühren vermengt und anschließend 60 g dieser Mischung in eine Glasschale (Durchmesser: 80 mm; Höhe: 10 mm) gegossen. Die Gelierzeit der Mischung betrug etwa 3 Minuten.

### Vergleichsbeispiel 1

Komponente A2) wurde mit einem nicht-reaktiven Verdünner auf einen NCO-Gehalt von 18% eingestellt und anschließend mit Komponente B) umgesetzt. Die Umsetzung sowie die Herstellung des Prüfkörpers erfolgte ganz analog wie in Beispiel 1, wobei anstelle der Komponente A1) die Komponente A2) eingesetzt wurde.

### 3. Anwendungstechnische Prüfungen

Die gemäß Beispiel 1 und Vergleichsbeispiel 1 erhaltenen Polyurethan-Gießharz-Massen wurden gemäß DIN 53505 hinsichtlich Ihrer Shore-D-Härte nach 30 und nach 60 Minuten untersucht. Die Ergebisse sind in Tabelle 1 zusammengestellt:

**Tabelle 1**

| | Shore-D-Härte der Polyurethan-Gießharz-Masse gemäß Vergleichsbeispiel 1 | Shore-D-Härte der Polyurethan-Gießharz-Masse gemäß Beispiel 1 |
|---|---|---|
| nach 30 Minuten | 68 | 73 |
| nach 60 Minuten | 71 | 75 |

Es zeigte sich, daß die **Durchhärtung** beim erfindungsgemäßen Beispiel 1 schneller war, als beim nicht-erfindungsgemäßen Vergleichsbeispiel 1 (höhere Shore-D-Werte bedeuten höhere Härtegrade).

Darüber hinaus wurde die Wärmebeständigkeit der gemäß Beispiel 1 und Vergleichsbeispiel 1 erhaltenen Polyurethan-Gießharz-Massen gemessen. Zur Prüfung der Wärmebeständigkeit wurden die gemäß Beispiel 1 und Vergleichsbeispiel 1 erhaltenen Prüfkörper jeweils für eine Stunde auf 80, 100 bzw. 130 °C erhitzt. Anschließend wurde wiederum die Shore-D-Härte gemäß DIN 53505 gemessen. Die Ergebnisse sind in Tabelle 2 zusammengestellt:

**Tabelle 2**

| | Shore-D-Härte der Polyurethan-Gießharz-Masse gemäß Vergleichsbeispiel 1 | Shore-D-Härte der Polyurethan-Gießharz-Masse gemäß Beispiel 1 |
|---|---|---|
| bei 80 °C | 61 | 64 |
| bei 100 °C | 56 | 61 |
| bei 130 °C | 34 | 60 |

Es zeigte sich, daß die **Wärmebeständigkeit** der gemäß dem erfindungsgemäßen Beispiel 1 erhaltenen Polyurethan-Gießharz-Massen erheblich besser war, als bei den Polyurethan-Gießharz-Massen die gemäß dem nicht-erfindungsgemäßen Vergleichsbeispiel 1 erhalten wurden. Bei den erfindungsgemäßen Gießharzmassen blieb nämlich die Shore-D-Härte in etwa konstant auf gutem Niveau, bei den nicht erfindungsgemäßen Gießharzmassen sank sie dagegen mit zunehmender Temperaturbelastung signifikant ab.

## Patentansprüche

1. Verwendung Schaum-freier Zusammensetzungen mit einem Gehalt an Polyurethanen zur Herstellung von Gießharzen und Beschichtungsmassen, dadurch gekennzeichnet, daß die Zusammensetzungen Polyurethane auf Basis von Diphenylmethandiisocyanat enthalten und daß diese Polyurethane als Bausteine enthalten
A) Polymer-MDI mit einem Gehalt an Diisocyanat-Monomeren von weniger als 30 Gew.-% - bezogen auf das Polymer-MDI - und mit einer durchschnittlichen NCO-Funktionalität von mehr als 2,7 und
B) mindestens ein Diol und/oder Polyol,
wobei das Polymer-MDI aus MDI technischer Qualität mit einer durchschnittlichen Funktionalität von wenigstens 2,3 durch Abtrennung von Diisocyanat-Monomeren herstellbar ist.

2. Verwendung nach Anspruch 1, wobei die Komponente A) einem Gehalt an Diisocyanat-Monomeren von weniger als 5 Gew-% - bezogen auf das Polymer-MDI ― aufweist.

3. Verwendung nach Anspruch 1 oder 2, wobei die Viskosität der Komponente A) im Bereich von 5 bis 5000 Pas bei 25 °C ― gemessen in Substanz nach DIN 53015 ― liegt.

4. Gießharze und Beschichtungsmassen auf Basis der Schaum-freien Zusammensetzung nach Anspruch 1.
